# EUROPEAN PATENT APPLICATION

(11) **EP 3 163 552 A1**
(43) Date of publication of application: **03.05.2017**
(21) Application number: 15812089.9
(22) Date of filing: 29.05.2015
(51) Int. Cl.: G08G 1/16, B60R 21/00, G06T 1/00, G08G 1/09

(54) **VEHICLE-MOUNTED IMAGING SYSTEM, IMAGE TRANSFER SYSTEM, IMAGE TRANSFER METHOD AND IMAGE TRANSFER PROGRAM**

(30) Priority: 26.06.2014 JP 2014131282
(71) Applicant: JVC Kenwood Corporation, Yokohama-shi, Kanagawa 221-0022 (JP)
(72) Inventor: SAKURAGI, Tomoki, Yokohama-shi Kanagawa 221-0022 (JP)
(74) Representative: Glawe, Delfs, Moll
(86) International application number: PCT/JP2015/002737
(87) International publication number: WO 2015/198532

(57) **Abstract**

An object is to notify a user of a communication terminal of a specific content of a danger. An on-vehicle video system (1) according to the present invention includes a camera (10) configured to capture images of surroundings of a vehicle, an information processing unit (11) configured to identify a person and a communication terminal in a captured image, and a communication unit (12) configured to send the captured image to the communication terminal. The on-vehicle video system (1) achieves a video transfer system by identifying a communication terminal in the captured image and sending the captured image to an identified communication terminal via base station devices and a network.

## Description

### Technical Field

The present invention relates to an on-vehicle video system, a video transfer system, a video transfer method, and a video transfer program, and to, in particular, an on-vehicle video system, a video transfer system, a video transfer method, and a video transfer program that send video of vehicle surroundings captured by a camera.

### Background Art

Recently, systems that prevent traffic accidents using on-vehicle systems such as navigation systems have been suggested.

For example, Patent Literature 1 examines how a sensor provided in a navigation device detects a pedestrian(s) and the navigation system notifies him or her of a danger through his or her mobile phone.

### Citation List

### Patent Literature

Patent Literature 1: Japanese Unexamined Patent Application Publication No. 2012-178127

### Summary of Invention

However, there is a problem in an alert system disclosed in Patent Literature 1 that a content of the notification of the danger to the pedestrian(s) is not sufficient.

To be more specific, in Patent Literature 1, although a user is notified of a danger by sound or vibrations, he or she is not notified that a car is approaching and a direction in which the car is approaching. For this reason, there has been a problem that it is difficult for a user of a mobile phone or a smartphone to take a specific action in order to avoid the danger.

In order to solve the above problem, an object of the present invention is to provide an on-vehicle system that can notify a user of a communication terminal of a specific content of a danger.

An on-vehicle video system according to the present invention includes: an imaging unit configured to capture images of surroundings of a vehicle; an information processing unit configured to identify a person and a communication terminal in an image captured by the imaging unit; and a communication unit configured to send the image captured by the imaging unit to the communication terminal.

A video transfer system according to the present invention includes: an on-vehicle video system including: an imaging unit configured to capture images of surroundings of a vehicle; an information processing unit configured to identify a person and a communication terminal in an image captured by the imaging unit; and a communication unit configured to send the image captured by the imaging unit to the communication terminal; and a communication terminal, wherein the communication terminal includes display means for displaying the image sent by the on-vehicle video system on a front of the display means.

A video transfer method according to the present invention includes, in an on-vehicle video system including an imaging unit configured to capture images of surroundings of a vehicle, an information processing unit configured to identify a person and a communication terminal in an image captured by the imaging unit, and a communication unit configured to send the image captured by the imaging unit to the communication terminal, capturing surroundings the vehicle; identifying a person and a communication terminal in the image captured by the imaging unit; and sending the image captured by the imaging unit to the communication terminal.

A video transfer program according to the present invention includes: an information processing step for identifying a person and a communication terminal in an image captured by an imaging unit; and a communication step for sending the image captured by the imaging unit from a communication unit to the communication terminal identified in the image.

According to the aspects, as the captured image of the vehicle surroundings can be sent to the communication terminal in the image, it is possible to alert the person gazing at the communication terminal by notifying him or her of a specific content of a danger.

### Brief Description of Drawings

Fig. 1 is a block diagram schematically showing a functional configuration of an on-vehicle video system according to an exemplary embodiment;
Fig. 2 is a drawing showing an application example of the on-vehicle video system according to the exemplary embodiment;
Fig. 3 is a drawing showing an example of image processing by the on-vehicle video system according to the exemplary embodiment;
Fig. 4 is a drawing showing the example of the image processing by the on-vehicle video system according to the exemplary embodiment;
Fig. 5 is a drawing showing the example of the image processing by the on-vehicle video system according to the exemplary embodiment;
Fig. 6 is a drawing showing the example of the image processing by the on-vehicle video system according to the exemplary embodiment;
Fig. 7 is a flowchart showing an operation of the on-vehicle video system when a vehicle turns to the left; and
Fig. 8 is a flowchart showing an operation of the on-vehicle video system according to the exemplary embodiment when a vehicle travels on a narrow road.

### Description of Embodiments

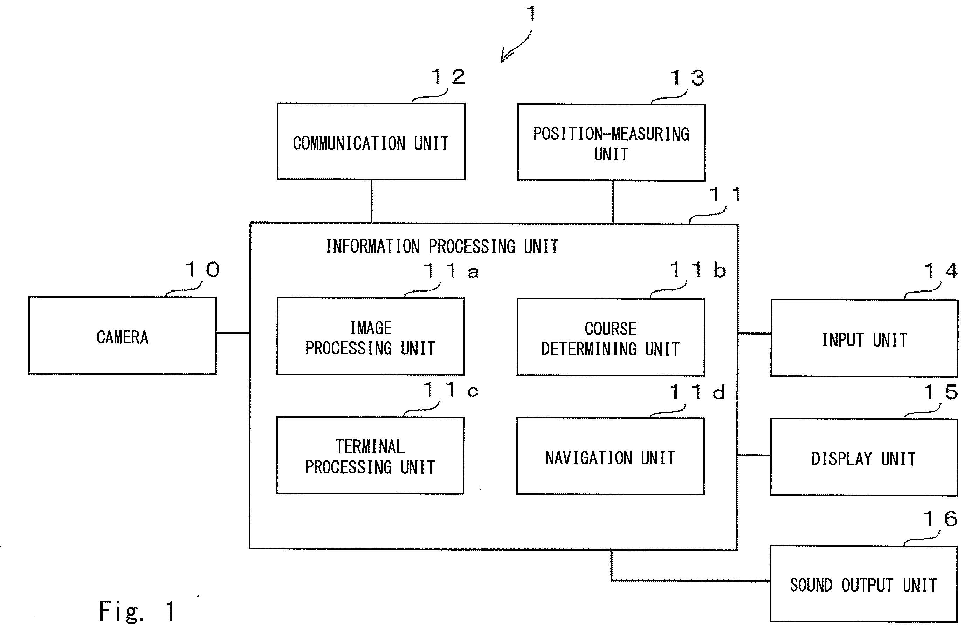

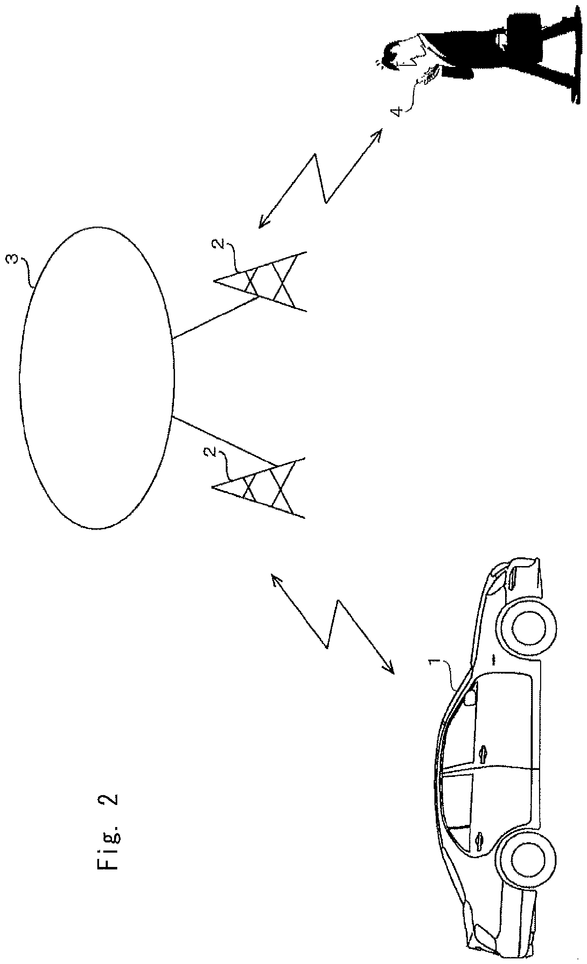

Hereinafter, an exemplary embodiment of the present invention will be described with reference to the drawings. Fig. 1 is a block diagram schematically showing a functional configuration of an on-vehicle video system according to this exemplary embodiment. Fig. 2 is a drawing showing an application example of the on-vehicle video system according to this exemplary embodiment. As shown in Fig. 2, an on-vehicle video system 1 achieves a video transfer system by identifying a communication terminal in a captured image and sending the captured image to an identified communication terminal 4 via base station devices 2 and a network 3.

As shown in Fig. 1, the on-vehicle video system 1 includes a camera 10, an information processing unit 11, a communication unit 12, a position measuring unit 13, an input unit 14, a display unit 15, and a sound output unit 16.

The camera 10 captures surroundings of a vehicle and outputs captured image data to the information processing unit 11 while the on-vehicle video system 1 is mounted on the vehicle. A camera with a CCD device or a CMOS device and a lens is preferable for the camera 10. The camera 10 may be disposed at a place different from a place where the on-vehicle video system body is installed and may be configured to send captured data to the on-vehicle video system 1 via wired or wireless communication and the like.

The information processing unit 11 is connected to the camera 10, the communication unit 12, the position measuring unit 13, the input unit 14, the display unit 15, and the sound output unit 16 via wired lines or wirelessly. The information processing unit 11 receives signals, performs information processing, and outputs a processing result. To be more specific, the information processing unit 11 includes an image processing unit 11a, a course determining unit 11 b, a terminal processing unit 11c, and a navigation unit 11d. The information processing unit 11 is composed of, for example, a CPU and a memory.

The image processing unit 11a processes image data of vehicle surroundings captured by the camera 10, identifies the presence of a person(s) and a communication terminal(s) in the image data, and outputs a result of the identification to the terminal processing unit 11c and the communication unit 12. To be more specific, the image processing unit 11a performs an image detection process such as edge detection, pattern matching, and the like in order to identify the presence of the person(s) and the communication terminal(s) in the image data.

Further, the image processing unit 11a evaluates a positional relationship and angular relationship between the person(s) and the communication terminal(s) in the image data and determines as to whether or not the person(s) is gazing at the communication terminal(s).

The course determining unit 11b determines a travelling course of the vehicle based on information from the navigation unit 11d. To be more specific, the course determining unit 11b determines which one of a left turn, a right turn, or proceeding straight the course of the vehicle will take in real time. Further, the course determining unit 11b determines as to whether a road on which a current vehicle is travelling has a width less than a predetermined value in real time.

The terminal processing unit 11c obtains position information and identification information (e.g., ICCID, i.e., IC Card Identifier, of an SIM or UIM card and an uid, i.e., a user identifier, of a mobile phone) of an external communication terminal(s) via the communication unit 12 and an external network. Then, the terminal processing unit 11c identifies the identification information of the communication terminal(s) in the captured image of the vehicle surroundings from the position information obtained from the position measuring unit 13 and the course of the vehicle obtained from the course determining unit 11b and sends the captured image to the identified communication terminal(s) via the communication unit 12 and the external network.

The navigation unit 11d stores map information, calculates a path from coordinate information obtained by the position measuring unit 13 and destination information that has been set based on information input by the input unit 14 and outputs a map, a current position, and path information to the display unit 15. The map information preferably includes information such as coordinates, directions, widths, intersections, and the like of roads.

The communication unit 12 communicates with the communication terminal(s) via a base station and a network in wireless communication. To be more specific, the communication unit 12 includes an antenna, an amplifier, a frequency converter, a demodulator, and a modulator. The communication unit 12 receives a wireless signal, performs amplification, frequency conversion, and demodulation on the received wireless signal, and outputs an obtained digital signal to the information processing unit 11. Further, the communication unit 12 performs modulation, frequency conversion, and amplification on a digital signal output by the information processing unit 11 and sends a wireless signal via the antenna. The communication unit 12 communicates with a base station and sends and receives data via a network in an upper layer by using the CDMA (Code Division Multiple Access) wireless communication scheme or the OFDM (orthogonal frequency-division multiplexing) wireless communication scheme defined in the standards of 3G (3rd Generation), LTE (Long Term Evolution), mobile WiMAX (Mobile Worldwide Interoperability for Microwave Access) or the like.

The position measuring unit 13 measures a current position and outputs position information to the information processing unit 11. For example, the position measuring unit 13 is composed of a GPS (Global Positioning System). The position measuring unit 13 may measure the position based on beacon signals of WiFi (Wireless Fidelity) and position information of a WiFi access point(s) or may measure the position by using the GPS together with the beacon signals and the position information. The position measuring unit 13 may further include one or a plurality of a vehicle speed sensor, a steering angle sensor, a gyro sensor, and an acceleration rate sensor in addition to the above components in order to improve an accuracy of the position measurement.

The input unit 14 receives an input of information by a user operation and outputs the information to the information processing unit 11. For example, the input unit 14 is composed of one or a plurality of a button, a knob, and a touch panel. The input unit 14 may be disposed separately from the on-vehicle video system 1 or may be composed of a remote control device. In the latter case, the remote control device preferably communicates with the on-vehicle video system 1 by wireless communication. The information may be input by voice instead of an operation of the input unit 14. The voice input can be achieved by a microphone that accepts the voice and by the information processing unit 11 analyzing voice data.

The display unit 15 displays image information and text information output by the information processing unit 11. For example, the display unit 15 is composed of a liquid crystal display. Further, the display unit 15 may be composed of a liquid crystal display integrated with the input unit 14 that is composed of a touch panel. Alternatively, the display unit 15 may be composed of an organic EL display or a plasma display.

The sound output unit 16 converts a voice signal output by the information processing unit 11 into physical vibrations and emits sound. For example, the sound output unit 16 is composed of a speaker and an amplifier.

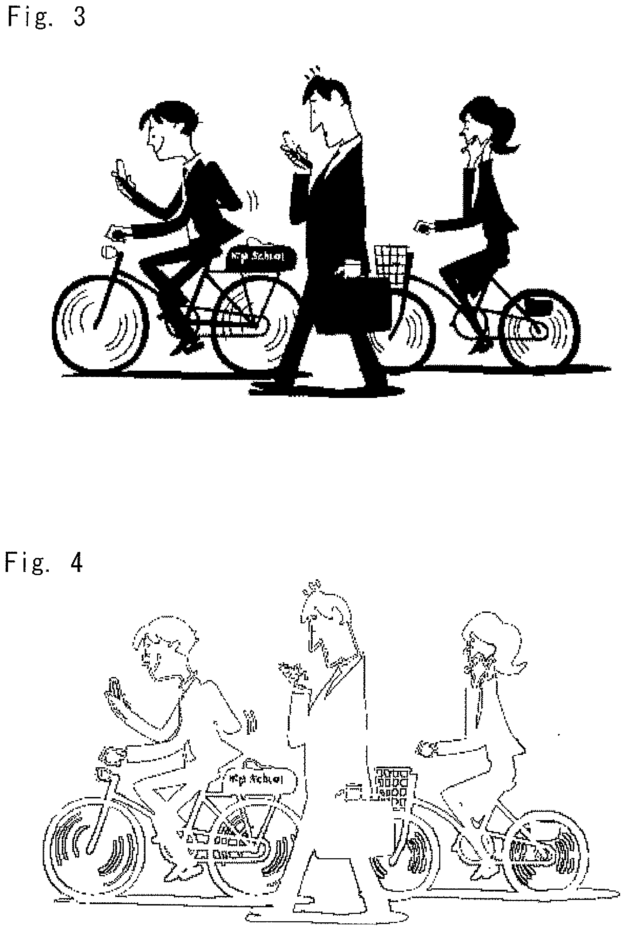

Next, image processing for evaluating as to whether or not there is a person(s) and a communication terminal(s) in a captured image will be described. Figs. 3 to 6 are drawings showing an example of the image processing by the on-vehicle video system according to this exemplary embodiment.

The image processing unit 11a of the on-vehicle video system 1 identifies whether or not there is a walking person(s) gazing at a communication terminal(s) in the captured image, i.e., whether or not there is a person(s) texting while walking in the captured image.

To be more specific, the image processing unit 11a performs edge detection on the image output by the camera 10. Fig. 3 is a photograph image showing an example of the image captured by the camera 10. For example, the image processing unit 11a detects edges, which are boundaries of an object in the image, by using an algorithm for identifying parts where brightness of the digital image is sharply changed in the image shown in Fig. 3. Fig. 4 is a drawing showing an example of image data obtained after the edge detection.

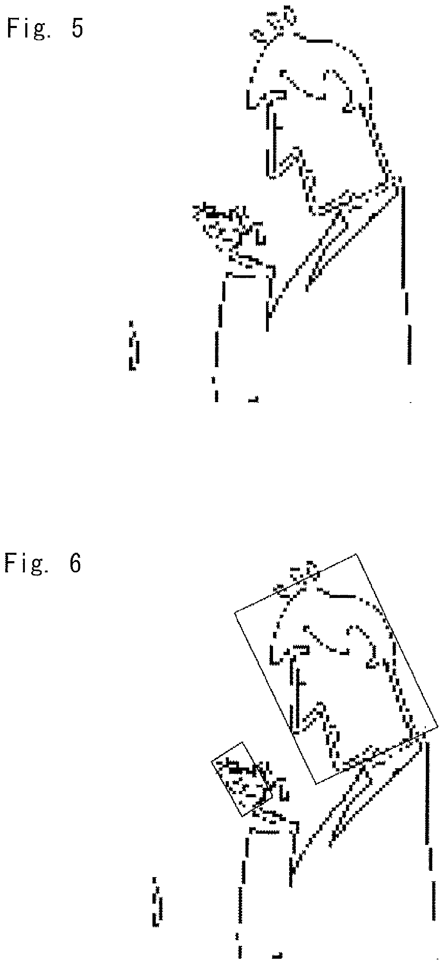

After the image processing unit 11a performs the edge detection, the image processing unit 11a performs pattern matching in order to cut out a region corresponding to a pattern of an upper body of a person. For example, the image processing unit 11a scans the image shown in Fig. 4 to find out whether or not there is a region that matches or is similar to a template pattern of a shape of a person. Then, the image processing unit 11a cuts out the region that matches or is similar to the template pattern of the shape of the person. Fig. 5 is a drawing showing an example of the cut-out image data.

After that, the image processing unit 11a performs the edge detection and the pattern matching on the cut-out image data and detects a region that matches or is similar to a pattern of a head of a person or a pattern of a communication terminal. To be more specific, the image processing unit 11a changes an X-axis and an Y-axis of the image data and an inclination angle of the pattern with respect to the image data and scans a pattern of a head of a person and the pattern of the communication terminal.

Next, the image processing unit 11a evaluates the matched pattern as to whether or not there is a person(s) texting while walking from a relationship between positions and angles of the patterns of the head of the person and the communication terminal.

For example, the image processing unit 11a calculates a range of a line of sight from the angle of the head (a face). The image processing unit 11a determines that there is a person(s) texting while walking if a communication terminal(s) is on a line extended from the line of sight of the person(s). Further, a range of an angle of a line of sight is preferably determined from an angle of the line of sight. Commonly, the visual field of one eye of a human being is about 60 degrees above and about 70 degrees below the eye. Both eyes are at the middle of the visual field taken into account the vertical length of the face. Accordingly, a perpendicular line from a center of a long axis of the pattern matched head (i.e., an axis connected between a neck and a top of head) is preferably used a reference line of sight, and an angular range within 60 degrees above and 70 degrees below with respect to the reference line of sight is preferably used as a line of sight. Fig. 6 is a drawing showing an example of a determination on a cut-out image data.

As described above, in the on-vehicle video system according to this exemplary embodiment, when the image processing unit 11a determines that, in the captured image of the vehicle surroundings, the person(s) is gazing at the communication terminal(s) if the pattern matched communication terminal(s) is present on line(s) extended from the line(s) of sight calculated from the angle(s) and the visual field(s) in the image of the pattern matched person, the on-vehicle video system sends the captured image to the communication terminal(s) to thereby alert a pedestrian(s) who is unaware of a vehicle approaching him or her.

In the above descriptions, although the pattern matching is performed on a pedestrian(s), the same process can be performed on a person(s) who is operating a communication terminal(s) while riding a bicycle(s). In this case, a template pattern of a person who is riding a bicycle is prepared, and the pattern matching is performed. Likewise, the pattern matching can be performed on a person who is pushing a stroller, a wheelchair, or a walking aid for the elderly. Moreover, the same process can be performed on a driver who is operating a communication terminal while driving an automobile.

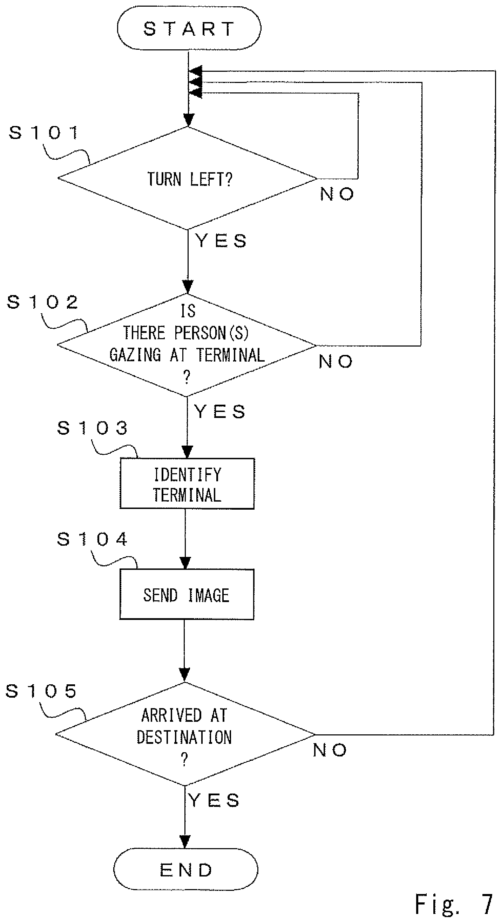

Next, an example of a condition for performing processes on an image and then the image is sent to the communication terminal will be described. Firstly, an example in which the image is sent to the communication terminal when a vehicle makes a left turn will be described. Fig. 7 is a flowchart showing an operation of the on-vehicle video system according to this exemplary embodiment when the vehicle makes a left turn.

In S101, the course determining unit 11b determines as to whether or not the vehicle makes a left turn by using one or a plurality of the map information, the coordinate information, and the course information from the navigation unit 11d, the vehicle speed sensor, the steering angle sensor, the gyro sensor, and the acceleration rate sensor. If the vehicle makes a left turn, the process is moved to S102, while when the vehicle does not make a left turn, the process of S101 is repeated.

In S102, the image processing unit 11a determines as to whether or not there is a person(s) who is gazing at a communication terminal(s) in the image captured by the camera 10. If the image processing unit 11a determines that there is a person(s) gazing at a communication terminal(s), the process is moved to S 103, while when the image processing unit 11a determines that there is no person who is gazing at a communication terminal, the process is returned to the process of S101.

In S 103, the terminal processing unit 11c identifies identification information of the communication terminal(s) in the image captured by the camera 10, and then the process is moved to the process of S104. In S104, the communication unit 12 sends the image captured by the camera 10 to the communication terminal(s) identified in S 103, and then the process is moved to the process of S105.

In S105, the navigation unit 11d determines as to whether or not the vehicle has arrived at a destination. If the vehicle has not arrived at the destination, the process is returned to the process of S101, while if the vehicle has arrived at the destination, the process is ended.

As described above, the on-vehicle video system of this exemplary embodiment further includes the course evaluating unit 11b that determines a course in which the vehicle will travel. When the on-vehicle video system of this exemplary embodiment determines that the person(s) and the vehicle are approaching to each other when the vehicle makes a left turn based on the determination by the course determining unit 11b, the captured image is sent to the communication terminal(s) to thereby alert a pedestrian(s) who is unaware of the vehicle approaching him or her at a place such as intersections where vehicles and pedestrians cross each other.

Although an example of a left turn has been described above, the same processes can be performed in the case of a right turn in order to alert a pedestrian(s). The determination of whether or not a vehicle makes a left turn and the determination of whether or not the vehicle makes a right turn may be performed at the same time or one-by-one in order.

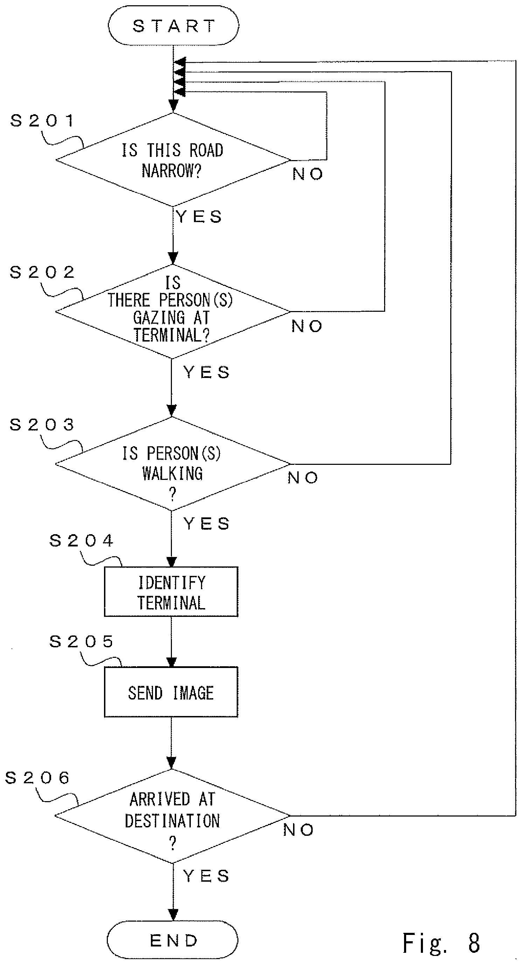

Next, an example in which an image is sent to the communication terminal(s) when a vehicle travels on a narrow road will be described. Fig. 8 is a flowchart showing an operation of the on-vehicle video system of this exemplary embodiment when a vehicle travels on a narrow road.

In S201, the course determining unit 11b determines as to whether or not a width of a road on which the vehicle travels is less than a predetermined width using the map information, the coordinate information, and the path information from the navigation unit 11d. If the width of the road on which the vehicle is travelling is narrower than the predetermined width, the process is moved to S202, while when the width of the road on which the vehicle is travelling is greater than the predetermined width, the process of S201 is repeated.

In S202, the image processing unit 11a determines as to whether or not there is a person(s) who is gazing at a communication terminal(s) in the image captured by the camera 10. If the image processing unit 11a determines that there is a person(s) gazing at a communication terminal(s), the process is moved to S203, while when the image processing unit 11a determines that there is no person who is gazing at a communication terminal, the process is returned to the process of S201.

In S203, the image processing unit 11a determines as to whether or not the person(s) gazing at the communication terminal(s) is walking. When the image processing unit 11a determines that the person(s) gazing at the communication terminal(s) is walking, the process is moved to S204, while when the image processing unit 11a determines that the person(s) gazing at the communication terminal(s) is not walking, the process is returned to the process of S201.

In S204, the terminal processing unit 11c identifies identification information of the communication terminal(s) in the image captured by the camera 10, and then the process is moved to the process of S205. In S205, the communication unit 12 sends the image captured by the camera 10 to the communication terminal(s) identified in S204, and then the process is moved to the process of S206.

In S206, the navigation unit 11d determines as to whether or not the vehicle has arrived at the destination. If the vehicle has not arrived at the destination, the process is returned to the process of S201, while if the vehicle has arrived at the destination, the process is ended.

As described above, the on-vehicle video system of this exemplary embodiment further includes the course determining unit 11b that determines a course in which the vehicle travels. When the on-vehicle video system of this exemplary embodiment determines that there is a person(s) who is gazing at a communication terminal(s) and walking on a narrow road based on the determination by the course determination unit 11b, the on-vehicle video system sends a captured image to the communication terminal(s) to thereby alert a pedestrian(s) who is unaware of a vehicle approaching him or her at a place such as a narrow road where vehicles and pedestrians could get close to each other.

Note that the present invention is not limited to the above exemplary embodiments, and various modifications can be made without departing from the scope of the invention. For example, the navigation unit and the information processing unit may share the same CPU and the same memory or may include separate CPUs and separate memories. For example, the navigation unit and the information processing unit may be included in an existing navigation system.

Furthermore, the camera may capture an image of a part of the vehicle other than the front thereof. For example, a camera that captures an image of the back of the vehicle may be installed, and when the vehicle travels backward, a captured image may be sent to a person(s) who is operating a communication terminal(s) at the back of the vehicle in conjunction with the camera that captures the back of the vehicle. In addition, a camera that captures images of sides of the vehicle may be installed, and when the vehicle makes a left or right turn, an image captured in the corresponding direction may be sent to a person(s) who is operating a communication terminal(s).

In a further addition, determination of whether or not a vehicle makes a left turn, determination of whether or not the vehicle makes a right turn, determination of whether or not a road on which a vehicle is travelling is narrow, and determination of whether or not a vehicle is travelling backward may be performed at the same time or one-by-one in an arbitrary order.

The operations of the on-vehicle video system of this exemplary embodiment can be executed by hardware such as ASIC (Application Specific Integrated Circuit) etc. or software. Further, some processes may be executed by software and other processes may be executed by hardware. When some processes are executed by software, a computer system including one or a plurality of CPUs (Central Processing Units) such as a microprocessor or the like may execute a program regarding the processes of the functional blocks. Such a program can be stored and provided to a computer using any type of non-transitory computer readable media. Non-transitory computer readable media include any type of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Compact Disk Read Only Memory), a CD-R, and a CD-R/W, a DVD-ROM (Digital Versatile Disc Read Only Memory), a DVD-R (DVD Recordable), a DVD-R DL (DVD-R Dual Layer), a DVD-RW (DVD ReWritable), a DVD-RAM, a DVD+R, a DVD+R DL, a DVD+RW, a BD-R (Blu-ray (registered trademark) Disc Recordable), a BD-RE (Blu-ray (registered trademark) Disk Rewritable), a BD-ROM, and a semiconductor memory (such as a mask ROM, a PROM (Programmable ROM), an EPROM (Erasable PROM), a flash ROM, and a RAM (Random Access Memory)). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

The present application is based upon and claims the benefit of priority from Japanese Patent Application No. 2014-131282, filed on June 26, 2014, the entire contents of which are hereby incorporated by reference.

### Industrial Applicability

The present invention can be applied to an on-vehicle video system, a video transfer system, a video transfer method, and a video transfer program, and to, in particular, an on-vehicle video system, a video transfer system, a video transfer method, and a video transfer program that send video of vehicle surroundings captured by a camera.

### Reference Signs List

- 1: ON-VEHICLE VIDEO SYSTEM
- 2: BASE STATION DEVICE
- 3: NETWORK
- 10: CAMERA
- 11: INFORMATION PROCESSING UNIT
- 11a: IMAGE PROCESSING UNIT
- 11b: COURSE DETERMINING UNIT
- 11c: TERMINAL PROCESSING UNIT
- 11d: NAVIGATION UNIT
- 12: COMMUNICATION UNIT
- 13: POSITION MEASURING UNIT
- 14: INPUT UNIT
- 15: DISPLAY UNIT
- 16: SOUND OUTPUT UNIT

## Claims

1. An on-vehicle video system comprising:
an imaging unit configured to capture images of surroundings of a vehicle;
an information processing unit configured to identify a person and a communication terminal in an image captured by the imaging unit; and
a communication unit configured to send the image captured by the imaging unit to the communication terminal.

2. The on-vehicle video system according to Claim 1, wherein
the information processing unit evaluates as to whether or not a positional relationship between the person and the communication terminal is such that the person is gazing at the communication terminal in the image captured by the imaging unit, and
when the information processing unit determines that the person is gazing at the communication terminal in the image, the communication unit sends the image captured by the imaging unit to the communication terminal.

3. The on-vehicle system according to Claim 2, wherein the information processing unit performs edge detection on the image captured by the imaging unit, performs pattern matching between the image on which the edge detection has been performed and shapes of a person and a communication terminal, and when a pattern matched communication terminal is positioned on a line extended from a line of sight calculated from an angle and a visual field of a face of a pattern matched person in the image, the information processing unit determines that the person is gazing at the communication terminal.

4. The on-vehicle video system according to any one of Claims 1 to 3, wherein
the information processing unit further comprises a course determining unit configured to determine a course in which the vehicle travels,
the information processing unit determines as to whether or not the person and the vehicle are getting close to each other and whether or not the person who is gazing at the communication terminal is walking in the image captured by the imaging unit based on the course determined by the course determining unit, and
when the information processing unit determines that the person is walking and the vehicle is approaching to the person, the communication unit sends the image captured by the imaging unit to the communication terminal.

5. A video transfer system comprising:
an on-vehicle video system comprising:
an imaging unit configured to capture images of surroundings of a vehicle;
an information processing unit configured to identify a person and a communication terminal in an image captured by the imaging unit; and
a communication unit configured to send the image captured by the imaging unit to the communication terminal; and
a communication terminal, wherein the communication terminal includes display means for displaying the image sent by the on-vehicle video system on a front of the display means.

6. A video transfer method in an on-vehicle video system comprising an imaging unit configured to capture images of surroundings of a vehicle, an information processing unit configured to identify a person and a communication terminal in an image captured by the imaging unit, and a communication unit configured to send the image captured by the imaging unit to the communication terminal, the video transfer method comprising:
capturing surroundings the vehicle;
identifying a person and a communication terminal in the image captured by the imaging unit; and
sending the image captured by the imaging unit to the communication terminal.

7. A video transfer program comprising:
an information processing step for identifying a person and a communication terminal in an image captured by an imaging unit; and
a communication step for sending the image captured by the imaging unit from a communication unit to the communication terminal identified in the image.
